# EUROPEAN PATENT SPECIFICATION

(11) **EP 1 163 109 B1**
(45) Date of publication and mention of the grant of the patent: **14.05.2003**
(21) Application number: 99909974.0
(22) Date of filing: 12.03.1999
(51) Int. Cl.: B29D 30/48, B60C 15/04

(54) **TIRE BEAD AND ITS METHOD OF MANUFACTURE**
REIFENWULSTKERN UND VERFAHREN ZU DESSEN HERSTELLUNG
TALON DE PNEU ET PROCEDE DE FABRICATION DUDIT TALON

(43) Date of publication of application: 19.12.2001
(73) Proprietor: THE GOODYEAR TIRE & RUBBER COMPANY, Akron, Ohio 44316-0001 (US)
(72) Inventor: GOLIGHTLY, Ralf, Wayne, Gadsden, AL 35901 (US)
(74) Representative: Leitz, Paul
(86) International application number: US9905529
(87) International publication number: WO00054964

(56) References cited:
- GB-A- 2 325 200
- US-A- 2 149 079
- US-A- 2 902 083

## Description

### TECHNICAL FIELD

The present invention generally relates to wire fabrics and structures. More particularly, this invention relates to tire beads and their methods of manufacturing.

### BACKGROUND OF THE INVENTION

A tire bead is that part of a tire which anchors the tire onto a wheel's rim. It is essentially an annular tensile member or inextensible hoop. Every tire has two such beads which are located within the rubber which makes up the inner-most circumference on each side of the tire.

In the usual procedure for manufacturing tire beads, the ends of individual wires, the exteriors of which are often rubber coated, are fed into a tire bead making machine. Machines of this type are old and well known in the tire building art.

Typical machines of this type are disclosed in U. S. Patents Nos. 1,913,336, 2,902,083 and 5,385,621. These machines comprise a rotating drum about which the wire is wrapped a predetermined number of turns, dependent upon the strength and/or cross-sectional area of the tire bead desired. Standard equipment on such machines includes the means for automatically introducing the leading end of the wire into a gripper on the drum, intermittently operated means for rotating the drum, a stacking device which moves the incoming wire so as to control and build-up the cross-sectional shape of the resulting tire bead, and a knife to sever the incoming wire at the end of each building cycle. During the pause in the rotation of the drum, the finished tire bead is ejected laterally from the drum.

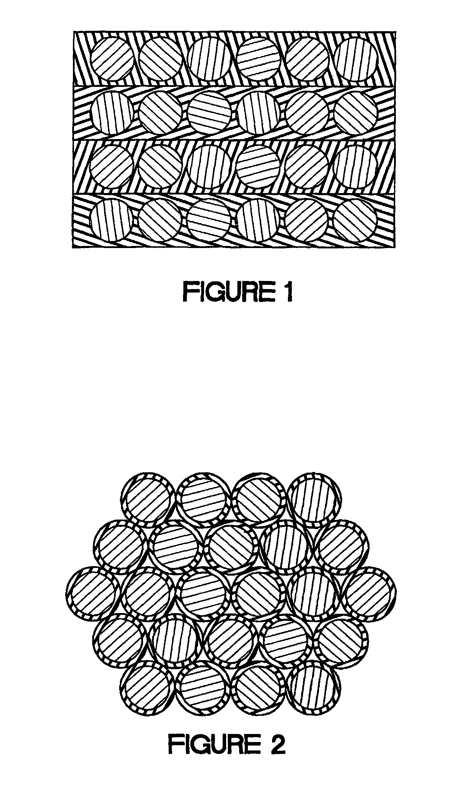

One deficiency of conventional tire bead making machines is their relatively slow operating speeds and consequently the amount of time required to fabricate a tire bead. To overcome this deficiency, various methods have been attempted to feed such tire bead machines a strap comprised of four parallel wires held together by a coating of rubber or other elastomeric material. A rectangular cross-sectional shaped tire bead formed using a standard style strap is shown in Figure 1.

However, because such straps are not pliable, their use has been seen to severely limit the range of cross-sectional shapes of the tire beads which can be built-up by using them. For example, a conventional hex cross-sectional shaped tire bead, see Figure 2, which is commonly used in the tire industry, cannot be built up using the types of straps shown in Figure 1. Also, by increasing the number of wires forming each bead, the strength of the bead is reduced.

Another deficiency of conventional tire bead making machines is the problem associated with how to deal with the cut ends of the resulting tire bead. The springback nature of the wire ends can result in their coming loose and causing wire misalignments which can result in an unacceptable number of manufacturing interruptions in order to restring and realign the wires.

Thus, despite the prior art, there still exists a need for more efficient tire bead manufacturing processes.

### OBJECTS OF THE INVENTION

It is an object of the present invention to provide a more efficient tire bead manufacturing process as defined in one or more of the appended claims and as such, having the capability of accomplishing one or more of the following subsidiary objects.

An object of the present invention is to provide a method of constructing a tire bead with a strap containing two parallel wires enmeshed in an elastomeric material.

Still another object of the present invention is provide a new and improved type of tire bead formed of the strap of two parallel wires.

Other objects and advantages of this invention will become readily apparent as the invention is better understood by reference to the accompanying drawings and the detailed description that follows.

### SUMMARY OF THE INVENTION

The present invention is generally directed to satisfying the needs set forth above and the problems identified with prior tire bead manufacturing processes. Prior problems, associated with low operating efficiencies for tire bead machines are resolved by the present invention.

In accordance with one preferred embodiment of the present invention, the foregoing need can be satisfied by providing a method of making a tire bead characterized by the steps of forming a tape composed of a plurality of parallel wires coated with a resilient elastomeric material, the elastomeric material connecting adjoining parallel wires by a web formed between the wires, the web being of a predetermined size so as to yield the tape sufficiently pliable so as to allow the tape to be positioned to build up a tire bead having the same cross-sectional areas that can be built using individual wires, and forming a tire bead by winding such a tape a predetermined number of superimposed convolutions.

In another preferred embodiment, the present invention is seen to take the form of the above described method wherein the winding of the tape proceeds with the convolutions of the tape being laid in side by side relation and in successive superposed layers of predetermined widths to provide a tire bead of predetermined cross-sectional area.

In another preferred embodiment, the present invention is seen to take the form of a tire bead formed by any of the above described methods.

### BRIEF DESCRIPTION OF THE DRAWINGS

The structure, operation, and advantages of the invention will become further apparent upon consideration of the following description taken in conjunction with the accompanying drawings, wherein:
**Figure 1** is the cross-sectional view of a conventional tire bead fabricated by layering four straps, each of which consists of six parallel wires enmeshed in a rubber coating;
**Figure 2** is a cross-sectional view of a conventional hex cross-sectional shaped tire bead;
**Figure 3** is a side view of a tire bead manufacturing process according to the present invention;
**Figure 4** is a cross-sectional view of a tire bead tape according to the present invention; and
**Figure 5** is a cross-sectional view of a hex tire bead made from a tape according to the present invention.

### DEFINITIONS

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

### DETAILED DESCRIPTION OF THE PREFERRED EMBODIMENT

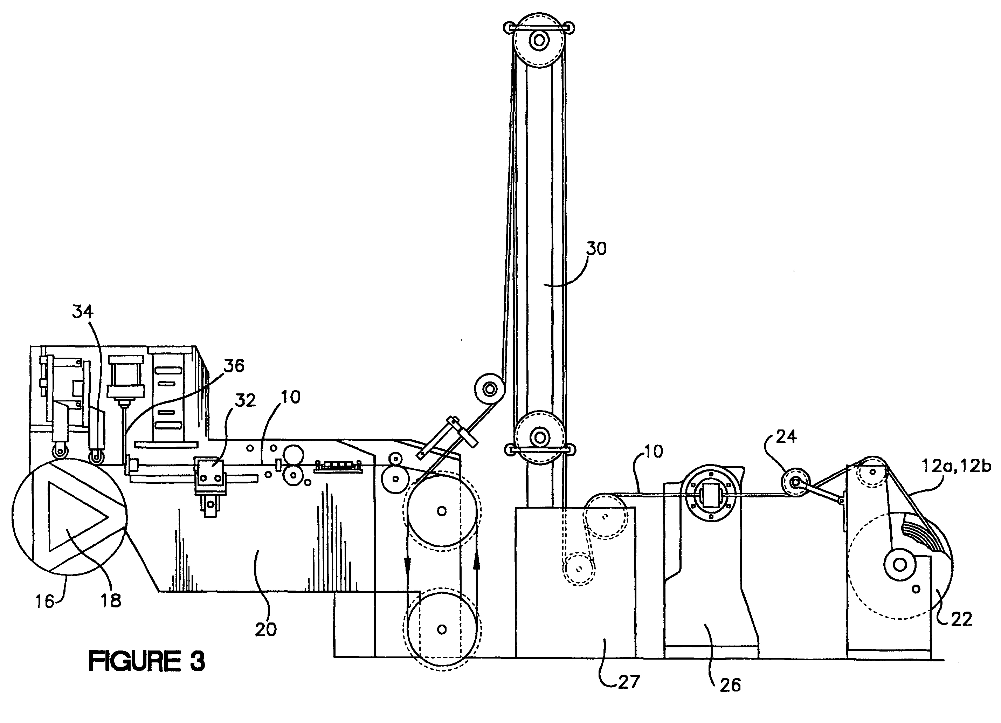

Referring now to the drawings wherein are shown preferred embodiments of the present invention and wherein like reference numerals designate like elements throughout, there is shown in **Figure 3** a side view of a tire bead manufacturing process according to the present invention.

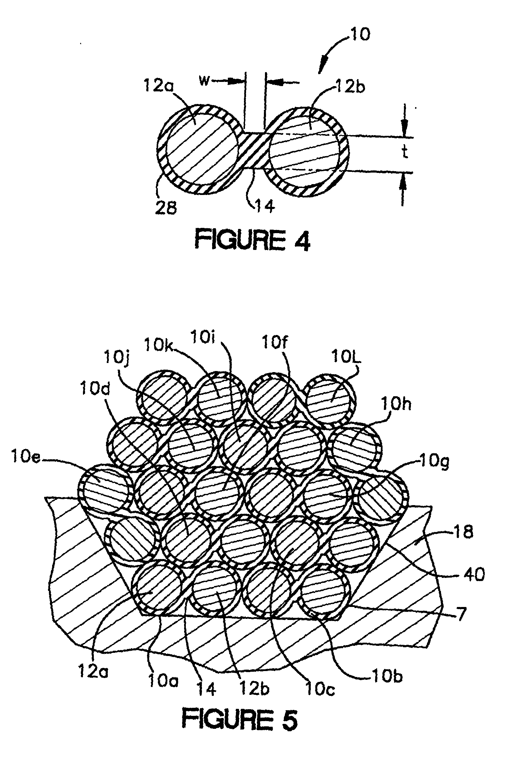

This embodiment is seen to comprise the steps of providing a tape **10,** as shown in **Figure 4,** composed of a plurality of parallel wires **12a,12b** coated with a resilient elastomeric material. The elastomeric material connects the adjoining parallel wires by a web **14** formed between the wires. The web **14** is of a predetermined size so as to yield the tape sufficiently pliable to allow the tape to be bent to build up the same cross-sectional areas that can be built up using individual wires. Tire beads **16** are formed by winding the tape **10** a predetermined number of superposed turns around the drum **18** of the tire bead machine **20.**

The tire bead manufacturing process of **Figure 3** is seen to comprise a plurality of large creels **22** which supply individual wires **12a,12b.** These creels are arranged side-by-side so that only one shows in **Figure 3.** The individual wires **12a,12b** are drawn from the creels **22** and passed into a spacing device **24,** such as a grooved guide roller, which serves to bring the wires into parallel alignment in a single horizontal plane, this being the basis for the eventual tape which these wires will comprise. The wires are next drawn through a tubing machine **26** where a coating **28** of elastomeric material, as shown in **Figure 4,** is forced around and between the separate wires **12a,12b** to coat the wires while forming a web **14** of predetermined size between the adjoining wires. A set of dies and inserts for the tubing machine's extruder are used to create the web's precise dimensions. The tubing machine is of any standard make and does not make up a part of the present invention.

See **Figure 4** for a cross-sectional view of the resulting tape **10** after it has passed through a cooling section **27** which is used set the elastomeric material. The tape **10** has a coating **28** about the wires **12a,12b** and a web **14** interconnecting the coated wires **12a,12b.** The web **14** has a thickness "t" and a width "w" which depends on the specific application. While tape **10** as shown, can be formed with two parallel wires, it is also within the terms of the present invention to form the tape of more wires, such as 6 or 8, embedded in elastomeric material and then slice the tape into a plurality of tapes of two wires embedded in rubber having a web therebetween.

In order to permit continuous operation of this process, a festooning storage device **30** is placed after the cooling section **27.** The tape from the festooning device **30** is wound upon the drum **18** of the tire bead making machine **20.** The tire bead making machine **20** has all the standard equipment usually included on such machines, including the mechanical components **32** for automatically introducing the leading end of the tape **10** into a gripper (not shown) on the drum **18,** and for intermittently rotating the drum. A stacking device **34** of conventional design moves the incoming tape **10** so as to control and build-up the cross-sectional shape of the resulting tire bead. A knife **36** severs the incoming tape at the end of each building cycle. During the pause in the rotation of the drum **18,** the finished tire bead 16 is ejected laterally from the drum.

Table I below shows preferred parameters for the webs **14** formed when various sizes of round steel wires are used in manufacturing the tapes **10** from which the tire beads are formed:

**TABLE I**

| Wire Diameter (in/mm) | Elastomeric Material | Coating Thickness (in/mm) | Web Thickness (in/mm) | Web Width (in/mm) |
|---|---|---|---|---|
| 0.050 in 1.27 mm | Rubber | 0.005 in 0.127 mm | 0.020-0.025 0.500-0.635 | 0.010 in 0.254 mm |
| 0.072 in 1.83 mm | Rubber | 0.005 in 0.127 mm | 0.025-0.030 0.635-0.762 | 0.010 in 0.254 mm |

Using such web sizes, it has been found that the resulting tapes **10** can be positioned at between 135 to 150 degree angles with respect to the majority of tape layers applied to a cylindrical drum in order to allow the tapes to be optimally configured to make the full range of cross-sectional shapes used in various tire bead configurations. For example, **Figure 5** shows a cross-sectional view of a hexagonal shaped tire bead **16** formed by using a tape **10** having two parallel wires **12a,12b** embedded in an elastomeric coating. In this example, a tape **10** is wound about a drum **18** so as to form twelve convolutions **10a,10b, .... 10L** of the single tape about the drum **18.** These convolutions typically are wound side to side within layers which are build up around the drum to yield the desired cross-sectional shape such as the hexagonal shaped tire bead **16.**

Typically, the tape **10** is wound in a groove **40** formed in the outer circumference of drum **18.** First the tape is wound onto the drum **18** at one end of the groove followed by an adjacent winding convolution **10b.** Then, the stacking device positions the next convolution **10c** above and slightly to the right of convolution **10b** so that the left side of the web rests above the web section of convolution **10b.** After convolution **10d** is applied in the manner just described, the convolution **10e** is applied so that one wire is adjacent the second layer and the second wire of convolution **10e** begins the third layer. After convolutions **10f** and **10g** are applied, the convolution **10h** is applied to end the third layer and begin the fourth layer. The construction process continues to form the bead shown in **Figure 5.** The ability of the tape **10** with the double wires to straddle two layers provides the flexibility for forming a bead having any desired shape including but not limited to a triangular, pentagonal or hexagonal shape. The outside convolutions **10c,10h** in the second, third and fourth layers have half convolutions oriented so that a line a-a between the centers of the convolution's parallel wires is at an angle α with respect to comparable line b-b between the centers of the adjoining convolutions in the same layer. While α might be sixty degree for a hexagonal shaped bead, any other angle can be used depending on the final bead shape.

## Claims

1. A method of making a tire bead (16) comprising the step of winding of convolutions (10a, 10b, ...10L) of a tape (10) in side by side relation and in successive superposed layers of predetermined widths to provide a tire bead (16) of predetermined cross-sectional area, the tape (10) being two parallel wires (12a,12b) coated with a resilient elastomeric material (28) **characterized by** the parallel wires (12a, 12b) being connected by a web (14) of the elastomeric material.

2. The method of making a tire bead (16) as recited in claim 1, including the step of winding the tape (10) about a drum (18) with the convolutions (10a, 10b, ...10L) being laid in side by side relation and in successive superposed layers of predetermined widths and with convolutions spanning superposed layers to provide a tire bead (16) of predetermined cross-sectional area.

3. The method of making a tire bead (16) as recited in claim 2, including the step of winding the tape (10) into a hexagonal cross-sectional shape.

4. A tire bead (16) made by the method of winding of convolutions (10a, 10b, ...10L) of a tape (10) in side by side relation and in successive superposed layers of predetermined widths to provide a tire bead (16) of predetermined cross-sectional area, the tape (10) being two parallel wires (12a,12b) coated with a resilient elastomeric material **characterized in that** the parallel wires (12a, 12b) are connected by a web (14) of the elastomeric material.

5. The tire bead (16) as recited in claim 4 wherein the tire bead is further made by winding the tape (10) about a drum (18) with the convolutions (10a, 10b, ...10L) being laid in side by side relation and in successive superposed layers of predetermined widths and with convolutions spanning superposed layers to provide a tire bead (16) of predetermined cross-sectional area.

## Patentansprüche

1. Verfahren zum Herstellen eines Reifenwulstes (16), das den Schritt des Wickelns von Windungen (10a, 10b, ..., 10L) eines Bandes (10) nebeneinander und in aufeinander folgenden übereinander gelegten Schichten vorgegebener Breiten umfasst, um einen Reifenwulst (16) mit einer vorgegebenen Querschnittsfläche zu schaffen, wobei das Band (10) aus zwei mit einem elastischen elastomeren Material (28) beschichteten parallelen Drähten (12a, 12b) besteht, **dadurch gekennzeichnet, dass** die parallelen Drähte (12a, 12b) durch ein Gewebe (14) aus dem elastomeren Material verbunden sind.

2. Verfahren zum Herstellen eines Reifenwulstes (16) nach Anspruch 1, das den Schritt des Wickelns des Bandes (10) um eine Trommel (18) umfasst, wobei die Windungen (10a, 10b, ..., 10L) nebeneinander und in aufeinander folgenden übereinander gelegten Schichten vorgegebener Breiten angelegt werden und wobei die Windungen übereinandergelegte Schichten überspannen, um einen Reifenwulst (16) mit einer vorgegebenen Querschnittsfläche zu schaffen.

3. Verfahren zum Herstellen eines Reifenwulstes (16) nach Anspruch 2, das den Schritt des Wickelns des Bandes (10) zu einer sechseckigen Querschnittsform umfasst.

4. Reifenwulst (16), der durch das Verfahren des Wickelns von Windungen (10a, 10b, ..., 10L) eines Bandes (10) nebeneinander und in aufeinander folgenden übereinander gelegten Schichten vorgegebener Breiten, um einen Reifenwulst (16) mit einer vorgegebenen Querschnittsfläche zu schaffen, hergestellt ist, wobei das Band (10) aus zwei mit einem elastischen elastomeren Material beschichteten parallelen Drähten (12a, 12b) besteht, **dadurch gekennzeichnet, dass** die parallelen Drähte (12a, 12b) durch ein Gewebe (14) aus dem elastomeren Material verbunden sind.

5. Reifenwulst (16) nach Anspruch 4, wobei der Reifenwulst ferner durch Wickeln des Bandes (10) um eine Trommel (18) hergestellt wird, wobei die Windungen (10a, 10b, ..., 10L) nebeneinander und in aufeinander folgenden übereinander gelegten Schichten vorgegebener Breiten angelegt werden und wobei die Windungen übereinander gelegte Schichten überspannen, um einen Reifenwulst (16) mit einer vorgegebenen Querschnittsfläche zu schaffen.

## Revendications

1. Procédé de confection d'un talon de bandage pneumatique (16) comprenant l'étape consistant à enrouler des spires (10a, 10b, ... 10L) d'un ruban (10) dans une relation de type côte à côte et en couches superposées successives de largeurs prédéterminées pour obtenir un talon (16) de bandage pneumatique possédant une superficie de section prédéterminée, le ruban (10) étant constitué par deux fils métalliques parallèles (12a, 12b) enrobés d'une matière élastomère résiliente (28), **caractérisé par le fait que** les fils métalliques parallèles (12a, 12b) sont reliés par une nervure (14) constituée d'une matière élastomère.

2. Procédé de confection d'un talon de bandage pneumatique (16) comme indiqué à la revendication 1, englobant l'étape consistant à enrouler le ruban (10) autour d'un tambour (18), les spires (10a, 10b, ... 10L) étant posées dans une relation de type côte à côte et en couches superposées successives de largeurs prédéterminées, des spires s'étendant sur des couches superposées pour procurer un talon de bandage pneumatique (16) possédant une superficie de section prédéterminée.

3. Procédé de confection d'un talon de bandage pneumatique (16) comme indiqué à la revendication 1, englobant l'étape consistant à enrouler le ruban (10) pour obtenir une configuration hexagonale en section transversale.

4. Talon de bandage pneumatique (16) confectionné via le procédé consistant à enrouler des spires (10a, 10b, ... 10L) d'un ruban (10) dans une relation de type côte à côte et en couches superposées successives de largeurs prédéterminées pour obtenir un talon (16) de bandage pneumatique possédant une superficie de section prédéterminée, le ruban (10) étant constitué par deux fils métalliques parallèles (12a, 12b) enrobés d'une matière élastomère résiliente (28), **caractérisé en ce que** les fils métalliques parallèles (12a, 12b) sont reliés par une nervure (14) constituée d'une matière élastomère.

5. Talon de bandage pneumatique (16) comme indiqué à la revendication 4, dans lequel le talon de bandage pneumatique est en outre confectionné en enroulant le ruban (10) autour d'un tambour (18), les spires (10a, 10b, ... 10L) étant posées dans une relation de type côte à côte et en couches superposées successives de largeurs prédéterminées, des spires s'étendant sur des couches superposées pour procurer un talon de bandage pneumatique (16) possédant une superficie de section prédéterminée.
